# EUROPÄISCHE PATENTANMELDUNG

(11) **EP 3 309 406 A1**
(43) Veröffentlichungstag der Anmeldung: **18.04.2018**
(21) Anmeldenummer: 16194122.4
(22) Anmeldetag: 17.10.2016
(51) Int. Cl.: F15B 1/02, F15B 1/26

(54) **HYDRAULIKAGGREGAT**

(71) Anmelder: A S S F A L G Qualitätshydraulik GmbH & Co. KG, 89597 Unterwachingen (DE)
(72) Erfinder: Assfalg, Andreas, 89597 Unterwachingen (DE)
(74) Vertreter: Meyer zu Bexten, Elmar

(57) **Zusammenfassung**

Der Erfindung liegt die Aufgabe zugrunde, Energie effizient zu nutzen und Verlustenergie im hydraulischen wie im elektrischen Bereich soweit als möglich zu reduzieren.Dem Nutzer ist ein modulares Hydraulikaggregat bereitzustellen, welches eine elektronische Steuerung in vorteilhafter Weise integriert. Somit soll eine Funktionserweiterung des Gesamtsystems durch eine bloße Aufrüstung der Hardware ermöglicht werden. Die Aufgabe wird durch ein Hydraulikaggregat mit einem Ölbehälter zum Bevorraten von Öl, einer mit dem Ölbehälter verbundene Pumpe zum Fördern des Öls, einer von der Pumpe gespeisten Druckleitung zum Führen des Öls unter einem vorgegebenen Öldruck, einem im Speicher angeordneten Drucksensor zum Messen des Öldrucks, einer mit dem Drucksensor verbundenen Anzeige zum Programmieren des Öldrucks auf ein angezeigtes Niveau und einer mit dem Drucksensor verbundenen Schnittstelle zum Programmieren des Öldrucks mittels eines externen Eingabegeräts gelöst.

## Beschreibung

### Technisches Gebiet

Die Erfindung bezieht sich auf Hydraulikaggregate, Verfahren für deren Betrieb und entsprechende Computerprogramme.

### Stand der Technik

In einem Hydraulikaggregat wird elektrische oder chemische Energie in Druckenergie, also Arbeitsvermögen einer Flüssigkeit, umgewandelt. Ein gattungsmäßiges Hydraulikaggregat besteht aus Motor(en) und Pumpe(n), den zu deren Steuerung erforderlichen Ventilen und einem Tank für die Hydraulikflüssigkeit.

Bekannt sind insbesondere Hydraulikaggregate mit Hydrospeichern, in denen die Hydraulikflüssigkeit unter Druck vorgehalten wird. Ein Anwendungsfall derartiger Speicher ist die Bereitstellung eines kurzzeitig hohen Volumenstroms innerhalb von hydraulischen Steuerungen, z. B. bei elektrohydraulischen Regelungen bzw. Steuerungen von Spannaggregaten. Durch die Speicherung hydraulischer Energie lässt sich der Pumpen-Volumenstrom hier weitgehend unabhängig vom benötigten Spanndruck einstellen und bevorraten. Somit kann der Motor- bei geeigneter Auslegung - an seinem optimalen Arbeitspunkt betrieben werden, sodass das Aggregat in seiner Gesamtheit einen besseren Wirkungsgrad erzielt. Spezielle Konzepte von Hydraulikanlagen behandelt GEBHARDT, Norbert, et al. Hydraulik: Grundlagen, Komponenten, Systeme. 6th edition. Edited by WILL, Dieter, et al. Berlin Heidelberg:
Springer Vieweg, 2015. ISBN 3662444011. S.387-396.

Herkömmliche Hydraulikaggregate zur Versorgung von Spannsystemen verursachen nach dem Stand der Technik mitunter beträchtliche Folgekosten, die sich über den Lebenszyklus des Systems akkumulieren. Einen softwaretechnischen Ansatz zur Lebenszyklus-orientierten Werkzeugmaschinenentwicklung verfolgt etwa DENKENA, Berend, et al. Lebenszyklus-orientierte Werkzeugmaschinenentwicklung. wt Werkstatttechnik online. 2006, S.441-446.

Die europäische Patentanmeldung EP 2808109 A (HAWE HYDRAULIK SE [DE]) 12.03.2014 offenbart ein Spannsystem mit Drucksensoren.

### Kurzbeschreibung der Erfindung

Gegenstand der vorliegenden Erfindung ist eine innovative und sinnvolle Verknüpfung einzelner Funktionen zur Erschließung verschiedenster Funktions- und Wettbewerbsvorteile sowie zur Schonung der Umwelt durch eine verbesserte Energieeffizienz.

### Technische Aufgabe

Der Erfindung liegt die Aufgabe zugrunde, Energie effizient zu nutzen und Verlustenergie im hydraulischen wie im elektrischen Bereich soweit als möglich zu reduzieren.

Die Betriebssicherheit bekannter Aggregate soll erhöht werden, sodass das zu bearbeitende Werkstück bzw. die vorgesehene Funktion selbst bei Stromausfall oder mechanischem Defekt des Hydraulikaggregates stets betriebssicher gespannt, gehalten bzw. auch positioniert werden kann.

Die Funktionalität bestehender Vorrichtungen ist durch die Schaffung eines selbstlernenden Regel- und Steuerungssystems weiterzuentwickeln, welches sich permanent auf neue Anforderungen einstellt.

Über ein möglichst kabelloses System soll die Verfügbarkeit der Funktionalität sichergestellt und die Überwachung von Prozessen erleichtert werden.

Dem Nutzer ist ein modulares Hydraulikaggregat bereitzustellen, welches eine elektronische Steuerung in vorteilhafter Weise integriert. Somit soll eine Funktionserweiterung des Gesamtsystems durch eine bloße Aufrüstung der Hardware ermöglicht werden. Die elektronische Steuerung erkennt in diesem Fall selbstständig etwaige neue Ventile und Sensoren und vermag auf dieser Grundlage die integrierte Steuerung zu parametrieren bzw. deren Funktionsumfang zu erweitern.

### Technische L ö sung

Die Aufgabe wird durch die kennzeichnenden Merkmale der unabhängigen Patentansprüche gelöst. Besondere Ausführungsarten der Erfindung sind in den abhängigen Patentansprüchen angegeben.

### Vorteilhafte Wirkungen

Erfindungsgemäß wird ein komplettes System geschaffen, welches ohne nachträglichen Aufwand einfach erweiterbar ist. Dazu werden keine externen Fachkräfte benötigt; die Erweiterung ist vielmehr so einfach möglich, dass lediglich die neuen Ventile verschraubt und die elektrischen Stecker beispielsweise für Druck- und Steuerleitung angesteckt werden müssen.

Eine Ausführungsart der Erfindung ist sofort einsatzbereit, da die Lieferung mit Ölfüllung erfolgen kann. Hierdurch ergibt sich eine Aufwandsersparnis zwischen einem und drei Personentagen. Zudem wird die von einer Inbetriebnahme mit nicht ordnungsgemäßem Druckmittel ausgehende Gefahr gebannt.

Während der Maschinenbearbeitungsphase kann durch die Pumpe des Aggregates der Hydraulikspeicher bzw. die Druckleitung permanent vorgefüllt werden. Somit steht in der Betätigungs- oder Bewegungsphase genügend hydraulische Leistung zur Verfügung, um bezogen auf ein herkömmliches Spannaggregat einen beträchtlichen Teil der zum Betrieb erforderlichen elektrischen Energie einzusparen. Als Hydraulikspeicher ist hierbei nicht nur ein gasgefüllter Druckbehälter im engeren Sinn, sondern grundsätzlich jedwede mit Öl oder einem anderweitigen kompressiblen Fluid angefüllte Leitung zu verstehen.

Als besonders effizient erweist sich das vorgeschlagene Hydraulikaggregat insofern, als durch das Speicherladeprinzip keine hydraulische und somit auch keine elektrische Energie über Druckverluste vernichtet wird.

Der Speicher des Hydraulikaggregats stellt innerhalb kurzer Zeit ein beträchtliches Volumen zur Verfügung. Durch die autonome Parametrierbarkeit der Speicherladung in Abhängigkeit der Lastzyklen können die Taktzeiten dramatisch erhöht und auch verringert werden. Somit wird bei einer erhöhten Taktzeit über die Drehzahlerhöhung oder Verringerung des Elektromotors über einen Frequenzumrichter die Förderleistung entsprechend angepasst. Mittels eines geeigneten Auswertungsalgorithmus erkennt das System, wie oft der Speicher laden soll, und erhöht die Frequenz des Elektromotors. Dadurch kann der Speicherladezyklus individuell an die Anwendung bedarfsgerecht permanent angepasst werden. Über die elektronische Leistungsregelung wird bei gleichbleibender elektrischer Leistung die Druckförderleistungskennlinie optimal ausgenutzt. Eine Leistungsregelung kann hierbei über eine konstante Pumpe erfolgen.

Ausfallzeiten lassen sich drastisch reduzieren, sofern durch Überwachung rechtzeitig der Verschleiß erkannt wird. Diese Überwachung erfolgt über einen selbstjustierenden Regelalgorithmus, welcher permanent die relevanten Werte wie den Druckanstieg innerhalb einer bestimmten Zeitspanne in Abhängigkeit von der Temperatur auswertet und entsprechend der kumulierten Vergangenheitsergebnisse Signale zur Weiterverarbeitung ausgibt. Generalüberholte und geprüfte Austauschaggregate können für diesen Fall zu einem gegenüber Neugeräten ermäßigten Preis angeboten werden. Die eingestellten, betreiberspezifischen Werte lassen sich einfach per Datenübertragung aufspielen und bei Bedarf in der Cloud ablegen.

Die Druckregelung kann im Wege einer Volumendosierung über eine Einzelumdrehung der Kolbenpumpe im drehwinkelüberwachten Betrieb erfolgen.

Da im normalen Regelbetrieb kein Druckverlust zu erwarten ist, da die ölführenden Leitungen in diesem Zustand ein geschlossenes System bilden, ist es ferner möglich, die zu erwartende Förderleistung zu errechnen. Dies geschieht durch eine Multiplikation des Fördervolumens der Pumpe pro Umdrehung mit der über den Elektromotor eingestellten Drehzahl der Pumpe. Das Fördervolumen ist immer bekannt; die Drehzahl wird hierzu über den Frequenzumrichter ermittelt. Eine entsprechende Ausführungsform ist vorrangig beim Einsatz einer Kolbenpumpe vorteilhaft, die stets den gleichen Wirkungsgrad aufweist.

Als besonders bedienerfreundlich erweist sich schließlich ein Aggregat, dessen Funktionen wie Drücke und Ansteuerung der Komponenten einfach per Knopfdruck definiert und nicht wie im Falle herkömmlicher Vorrichtungen über ein Untermenü an jedem einzelnen Drucksensor gesondert eingestellt werden.

### Kurze Beschreibung der Zeichnungsfiguren

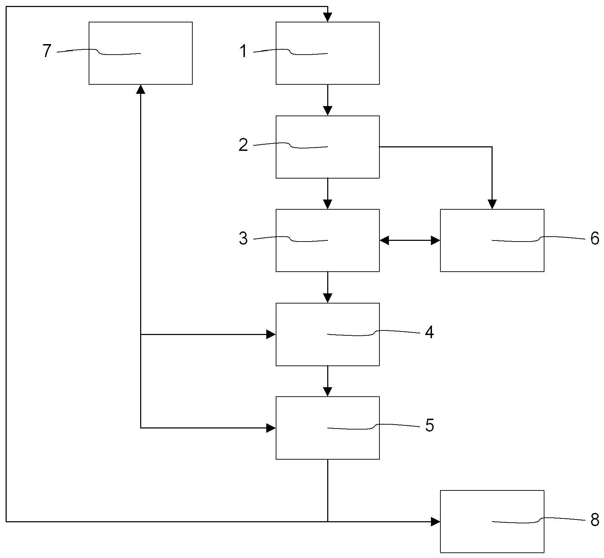

Die Abbildung zeigt das Flussdiagramm eines erfindungsgemäßen Verfahrens.

### Beschreibung der Ausführungsarten

Ein Weg zur Ausführung der beanspruchten Erfindung ist die Verwendung eines Controllerboards für alle realisierbaren Funktionen eines Aggregates, insbesondere Motoransteuerung und Ventilansteuerung mit nachgeschalteter Speicherladeregelung. Ein Eingang dient hierbei der Freigabe durch eine Maschinensteuerung; vorgesehen ist ferner ein Ausgang für Störmeldungen zum Abschalten der Maschine bzw. zur Ausgabe oder Anzeige eines Warnsignals.

Die Umstellung der unterschiedlichen Steuer- und Regelfunktionen erfolgt über integrierte Eingabemechanismen, vorzugsweise Dip-Schalter. Möglich ist auch eine externe Eingabe von Spannfunktionen/Arbeitsprozessen für die einzelnen Sektionen. Den hierzu verwendeten Regelalgorithmus implementiert das Controllerboard. Ausgänge für Ventile und Sensoren sowie Eingänge für Befehle sind in Gestalt eines Schraub- bzw. Steckerverbindungssystems vorgesehen.

Die Integration von Rohsensoren bzw. Grundsensoren ist ohne Interface-Module direkt auf dem Controllerboard vorgesehen. In Betracht kommen insbesondere Drucksensoren (4 - 20 mA), ein kapazitiver, als eigene Leiterplatte im Aggregat direkt eingebauter Ölstandsensor sowie ein auf der Leiterplatte des Ölstandsensors aufgebauter Temperatursensor wie beispielsweise ein Platin-Messwiderstand (Pt100).

Eine Fernbedienung, beispielsweise mit Folientastatur und Display dient zum Anzeigen und Einstellen von Drücken und Betriebszuständen ebenso wie zur Ansteuerung der Ventile und Notausschaltung des Aggregats.

Im Wege der Selbstüberwachung wird ferner in Abhängigkeit von den Parametern Druckanstieg, Temperaturentwicklung und Ölstand eine permanent lernende Selbstdiagnose erstellt und über das Display visualisiert. Die Selbstdiagnose kann manuell aktiviert werden.

Die Kommunikation bzw. Datenausgabe kann erfolgen über einen kabelgebunden Feld- oder Kommunikationsbus wie z.B. EtherCAT oder über eine kabellose Funkschnittstelle wie z.B. WLAN oder Bluetooth. Auf diese Weise ist es möglich, anhand der Selbstdiagnose den Nutzer rechtzeitig zu warnen, um das Aggregat vor dem Eintreten eines Schadensfalls austauschen zu können. Auch ein Datenaustausch mit der Cloud ist auf diesem Wege möglich.

Vorgesehen ist auch eine Qualitätsüberwachung: Durch das permanente Überwachen der Drücke für sensible Bauteile können über die Direkteingabe bzw. über eine Scanner- oder Cloudlösung die Parameter und Messwerte direkt in eine Datei geschrieben werden. Anhand der parallel zu hinterlegenden fortlaufenden Seriennummer bzw. Chargennummer ist so eine Nachverfolgung der Bauteile möglich.

Durch die Nutzung ausschließlich leckagefreier Ventile wird nahezu keine Verlustleistung abgegeben.

Sollte ein Aggregat ausgetauscht werden, so können die Betriebsdaten einfach über eine der oben beschriebenen Schnittstellen ausgelesen und auf das neue Aggregat übertragen werden.

Erfindungsgemäß kann im stromlosen Zustand oder bei einer Notabschaltung der hydraulische Druck und somit die letzte Position aufrechterhalten werden. Die Spannfunktion für einfachwirkende Zylinder kann hierbei durch jeweils ein, jene für doppeltwirkende Zylinder durch jeweils zwei 2/2-, 3/2-, 4/2- und-/oder 4/3-Wege-Sitzventile erfüllt werden. Verwendet werden handelsübliche Standardventile mit einer Gleichspannung von 24 V bei einer Stromstärke von 1,3 A und einer elektrischen Leistung von 28 W.

Um die Leistung zu reduzieren, wird eine Pulsweitenmodulation (PWM) vorgenommen. Ein Vorteil dieses Ansatzes liegt neben der Reduzierung der elektrischen Leistung im durch die Nutzung entsprechender Module verringerten Bauraum.

### Gewerbliche Anwendbarkeit

Das Anwendungsfeld erfindungsgemäßer Hydraulikspannaggregate erstreckt sich über sämtliche Zweige der fertigenden Industrie. Überall dort, wo mit Kraft Werkstücke zur Bearbeitung gespannt werden sollen, finden diese Systeme ihren Einsatz.

### Liste der Bezugszeichen

Die Abbildung verwendet folgende Bezugszeichen:
- 1: Sensordatenerfassung
- 2: Aufbereitung der Sensordaten
- 3: Analyse der Sensordaten
- 4: Zustandsmaschine
- 5: Ansteuerung der Ausgänge
- 6: Abspeichern der Basisdaten
- 7: Benutzerschnittstelle
- 8: Benutzerschnittstelle

### Liste der angegebenen Unterlagen

Die vorstehenden Ausführungen beziehen sich auf folgende Literatur:

### Patentdokumente

EP 2808109 A (HAWE HYDRAULIK SE [DE]) 12.03.2014

### Nichtpatentliteratur

GEBHARDT, Norbert, et al. Hydraulik: Grundlagen, Komponenten, Systeme. 6th edition. Edited by WILL, Dieter, et al. Berlin Heidelberg:
Springer Vieweg, 2015. ISBN 3662444011. S.387-396.

DENKENA, Berend, et al. Lebenszyklus-orientierte Werkzeugmaschinenentwicklung. wt Werkstatttechnik online. 2006, S.441-446.

## Patentansprüche

1. Hydraulikaggregat,
umfassend
einen Ölbehälter zum Bevorraten von Öl,
eine mit dem Ölbehälter verbundene Pumpe zum Fördern des Öls,
eine von der Pumpe gespeiste Druckleitung zum Führen des Öls unter einem vorgegebenen Öldruck und
einen im Speicher angeordneten Drucksensor zum Messen des Öldrucks, **gekennzeichnet durch**
eine mit dem Drucksensor verbundene Anzeige zum Programmieren des Öldrucks auf ein angezeigtes Niveau und
eine mit dem Drucksensor verbundene Schnittstelle zum Programmieren des Öldrucks mittels eines externen Eingabegeräts.

2. Hydraulikaggregat nach Anspruch 1,
**gekennzeichnet durch**
einen in der Druckleitung angeordneten Speicher zum Speichern des Öls, eine die Pumpe mit dem Speicher verbindende Druckleitung mit Druckabgängen,
in der Druckleitung und den Druckabgängen angeordnete weitere Drucksensoren und
Mittel zum Auswerten eines zeitlichen Druckverlaufs an den weiteren Drucksensoren.

3. Hydraulikaggregat nach Anspruch 2,
**gekennzeichnet durch**
mindestens einen im Ölbehälter angeordneten Temperatursensor zum Messen einer Temperatur des Öls,
Mittel zum Auswerten eines zeitlichen Verlaufs der Temperatur und
Mittel zum selbsttätigen Regeln des Öldrucks anhand von Betriebsbedingungen des Hydraulikaggregats, insbesondere des Verlaufs der Temperatur.

4. Hydraulikaggregat nach Anspruch 3,
**gekennzeichnet durch**
eine im Ölbehälter angeordnete Steuerplatine mit integriertem kapazitiven Füllstandssensor zum Erfassen und Visualisieren eines Füllstands des Ölbehälters und
Mittel zum Ausführen einer Funktion, insbesondere Herausgeben einer Warnung oder Durchführen einer Abschaltung, wenn der Füllstand ein kritisches Niveau erreicht.

5. Hydraulikaggregat nach Anspruch 4 in Gestalt eines Aggregats zum Spannen, Halten oder Positionieren,
**gekennzeichnet durch**
eine mit den Drucksensoren, dem Temperatursensor, dem Füllstandssensor und der Schnittstelle verbundene Steuereinheit zum Betreiben des Hydraulikaggregats, umfassend
Mittel zum Regeln von Zustandsgrößen des Spannaggregats, insbesondere des Öldrucks, der Temperatur und des Füllstands und
Mittel zum Ausgeben der Zustandsgrößen über die Schnittstelle.

6. Hydraulikaggregat nach Anspruch 5,
**gekennzeichnet durch**
einen Signalausgang zum Herausgeben der Warnung abhängig von den Zustandsgrößen und
einen Signaleingang zum Stillsetzen des Hydraulikaggregats,
wobei die Schnittstelle vorzugsweise drahtlos, insbesondere eine Bluetooth- oder WLAN-Schnittstelle ist.

7. Hydraulikaggregat nach Anspruch 5 oder Anspruch 6,
**gekennzeichnet durch**
Mittel zum Überwachen von Prozessparametern eines **durch** das Hydraulikaggregat unterstützten Fertigungsprozesses, insbesondere eines auf ein eingespanntes Werkstück ausgeübten Spanndrucks, einer hydraulischen Kraft oder einer zurückgelegten Wegstrecke,
Mittel zum Verwalten der Prozessparameter in einer externen Datenbank und Mittel zum Verknüpfen der Prozessparameter mit einer Chargennummer des Fertigungsprozesses oder einer Teilenummer des Werkstücks.

8. Hydraulikaggregat nach Anspruch 7,
**gekennzeichnet durch**
elektromagnetische Ventile zum Steuern des Öldrucks und eines Volumenstroms des Öls in verschiedenen Sektionen des Hydraulikaggregats und
einen Frequenzumrichter zum stetigen Steuern, Regeln und Visualisieren des Öldrucks und Volumenstroms unter bedarfsweiser Einbeziehung der Ventile.

9. Hydraulikaggregat nach Anspruch 8,
**gekennzeichnet durch**
ein von der Pumpe mit dem Öl gespeister Aktor zum Ausüben des Spanndrucks,
wobei der Frequenzumrichter derart gesteuert wird, dass er dem Motor einen lastabhängigen Drehwinkel vorgibt, sodass der Spanndruck **durch** den Volumenstrom geregelt wird.

10. Verfahren für den Betrieb eines Hydraulikaggregats nach einem der vorstehenden Ansprüche,
umfassend
eine Erfassung (1) von Sensordaten zumindest mittels des Drucksensors und eine Aufbereitung (2) der erfassten Sensordaten,
**gekennzeichnet durch**
eine Analyse (3) der aufbereiteten Sensordaten.

11. Verfahren nach Anspruch 10,
**gekennzeichnet durch**
eine Ladung des Speichers mittels einer Zustandsmaschine (4) anhand der analysierten Sensordaten.

12. Verfahren nach Anspruch 11,
**gekennzeichnet durch**
eine Ansteuerung (5) von Ausgängen des Hydraulikaggregats **durch** die Zustandsmaschine (4).

13. Verfahren nach Anspruch 12,
**gekennzeichnet durch**
ein Abspeichern (6) von Basisdaten anhand der aufbereiteten Sensordaten in einem Teach-in-Vorgang,
wobei die Analyse (3) der Sensordaten anhand der Basisdaten erfolgt.

14. Verfahren nach Anspruch 12 oder Anspruch 13,
**dadurch gekennzeichnet, dass**
die Ansteuerung (5) mittels mindestens einer Benutzerschnittstelle (7, 8) erfolgt.

15. Computerprogramm, insbesondere Steuerungsprogramm, das so angepasst ist, dass es ein Verfahren nach einem der Ansprüche 11 bis 14 ausführt.
